# EUROPÄISCHE PATENTSCHRIFT

(11) **EP 2 545 274 B1**
(45) Veröffentlichungstag und Bekanntmachung des Hinweises auf die Patenterteilung: **02.10.2013**
(21) Anmeldenummer: 11707847.7
(22) Anmeldetag: 09.03.2011
(51) Int. Cl.: F03D 1/06

(54) **WINDENERGIEANLAGEN-ROTORBLATT**
WIND TURBINE ROTOR BLADE
PALE DE ROTOR D'ÉOLIENNE

(30) Priorität: 10.03.2010 DE 102010002720
(43) Veröffentlichungstag der Anmeldung: 16.01.2013
(73) Patentinhaber: Wobben Properties GmbH, 26605 Aurich (DE)
(72) Erfinder: JAQUEMOTTE, Klaus-Peter, 26655 Westerstede (DE)
(74) Vertreter: Eisenführ, Speiser & Partner
(86) Internationale Anmeldenummer: PCT/EP2011/053563
(87) Internationale Veröffentlichungsnummer: WO 2011/110605

(56) Entgegenhaltungen:
- EP-A1- 1 880 833
- WO-A1-2009/139619
- DE-A1-102007 056 930
- DE-U1- 20 320 714

## Beschreibung

Die vorliegende Erfindung betrifft ein Windenergieanlagen-Rotorblatt.

DE 103 36 461 beschreibt ein Windenergieanlagen-Rotorblatt, wobei Gurte aus Faserverbundwerkstoffen in Längsrichtung in einem Rotorblatt vorgesehen werden. Diese Gurte können beispielsweise aus glasfaserverstärkten Fasern, beispielsweise durch Tränken in einem Harz, hergestellt werden. Die Gurte werden typischerweise sowohl an der Saugseite als auch an der Druckseite des Rotorblattes vorgesehen. Die Gurte können vorab hergestellt und anschließend in die Rotorblätter bzw. Halbschalen eingelegt werden. Dies hat den Vorteil, dass die Gurte vorab unter konstanten Bedingungen gefertigt werden können. Insbesondere soll hierbei vermieden werden, dass sich die Gurte während der Fertigung wellen. Eine Wellung der Gurte ist nicht erwünscht, weil die Gurte zum Lastabtrag dienen. Somit muss eine Qualitätssicherung vorgesehen werden, um zu verhindern, dass sich die Gurte wellen bzw. ondulieren.

Es ist eine Aufgabe der vorliegenden Erfindung, ein Windenergieanlagen-Rotorblatt vorzusehen, welches eine kostengünstige Fertigung ermöglicht.

Als allgemeiner Stand der Technik wird auf die DE 10 2008 022 548 A1 und die DE 203 20 714 U1 verwiesen.

Diese Aufgabe wird durch ein Windenergieanlagen-Rotorblatt gemäß Anspruch 1 gelöst.

Somit wird ein Windenergieanlagen-Rotorblatt vorgesehen. Das Rotorblatt weist eine Rotorblattwurzel, eine Rotorblattspitze, eine Rotorblattvorderkante und eine Rotorblatthinterkante auf. Das Rotorblatt weist ferner eine Druckseite und eine Saugseite sowie mindestens einen Steg zumindest teilweise zwischen der Saug- und der Druckseite auf. Das Rotorblatt weist eine Längsrichtung zwischen der Rotorblattwurzel und der Rotorblattspitze auf. Der Steg ist wellenförmig in Längsrichtung des Rotorblattes ausgebildet.

Gemäß einem Aspekt der vorliegenden Erfindung weist das Rotorblatt Gurte an der Druckseite und der Saugseite auf. Der mindestens eine Steg wird im Bereich der Gurte befestigt.

Gemäß einem weiteren Aspekt der vorliegenden Erfindung wird der Steg durch eine Warmumformung faserverstärkter Thermoplaste hergestellt.

Gemäß einem weiteren Aspekt der vorliegenden Erfindung ist die Wellenform des Steges sinusförmig ausgebildet.

Gemäß einem weiteren Aspekt der vorliegenden Erfindung sind mindestens zwei im Wesentlichen parallel zueinander angeordnete Stege vorgesehen.

Die Erfindung betrifft ebenfalls eine Verwendung von wellenförmig ausgebildeten Stegen bei der Herstellung eines Windenergieanlagen-Rotorblattes.

Die Erfindung betrifft ebenfalls eine Windenergieanlage mit mindestens einem oben beschriebenen Rotorblatt.

Die Erfindung betrifft den Gedanken, ein Windenergieanlagen-Rotorblatt vorzusehen, welches Stege zwischen der Druckseite und der Saugseite des Rotorblattes aufweist. Diese Stege sind im Längsschnitt nicht gerade, sondern wellenförmig bzw. onduliert ausgestaltet.

Somit wird ein gewellter bzw. ondulierter oder ein sinusförmig gewellter Steg bzw. Holmsteg vorgesehen. Der Holmsteg kann beispielsweise aus faserverstärkten Thermoplasten hergestellt werden, so dass eine automatische Fertigungsstraße beispielsweise durch Warmumformen der faserverstärkten Thermoplasten erfolgen kann. Vorzugsweise werden die faserverstärkten Thermoplasten von einer Rolle abgewickelt.

Vorzugsweise können die Stege aus thermoplastischem Material maschinell gefertigt werden. Alternativ dazu können die Stege aus Pre-Preps mit einer anschließenden UV-Härtung gefertigt werden.

Die Stege dienen dazu, die Festigkeit des Rotorblattes zu erhöhen. Dazu können die Stege zwischen Saug- und Druckseite des Rotorblattes vorgesehen werden. Die Stege können beispielsweise an den entlang der Druckseite und der Saugseite vorgesehenen Gurten befestigt bzw. verklebt werden. Diese Stege dienen lediglich der Festigkeit, nicht jedoch dem Lastabtrag innerhalb des Rotorblattes.

Weitere Ausgestaltungen der Erfindung sind Gegenstand der Unteransprüche.

Vorteile und Ausführungsbeispiele der Erfindung werden nachstehend unter Bezugnahme auf die Zeichnung näher erläutert.
- Fig. 1: zeigt eine schematische Darstellung einer Windenergieanlage gemäß der Erfindung,
- Fig. 2: zeigt einen Querschnitt eines Windenergieanlagen-Rotorblatts für die Windenergieanlage nach Fig. 1, und
- Fig. 3: zeigt einen Längsquerschnitt eines Windenergieanlagen-Rotorblattes für die Windenergieanlage nach Fig. 1.

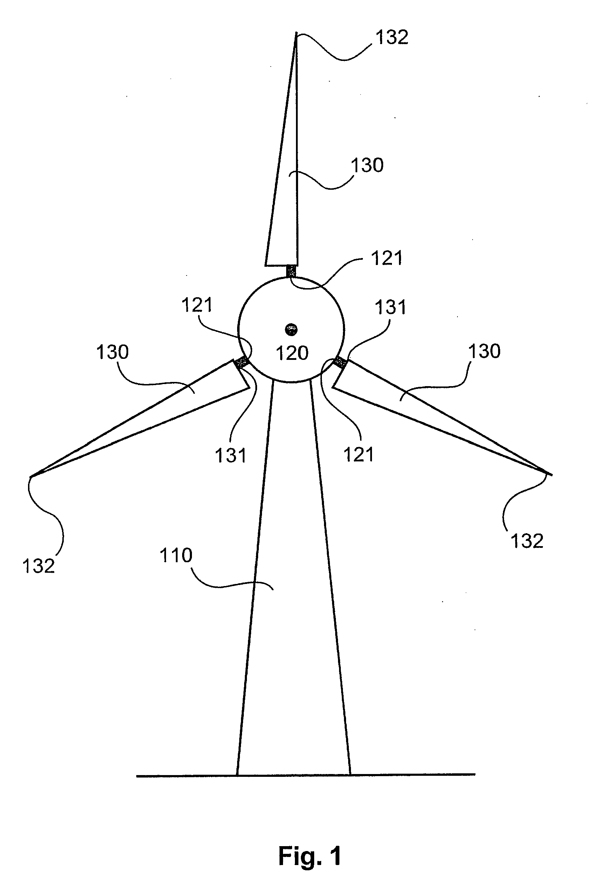

Fig. 1 zeigt eine schematische Darstellung einer Windenergleanlage gemäß der Erfindung. Die Windenergieanlage 100 weist einen Turm 110 mit einer Gondel 120 an dem oberen Ende des Turms 110 auf. An der Gondel 120 sind beispielsweise drei Rotorblätter 130 angeordnet. Die Rotorblätter 130 weisen eine Rotorblattspitze 132 und eine Rotorblattwurzel 131 auf. Die Rotorblätter 130 werden an der Rotorblattwurzel 131 beispielsweise an der Rotornabe 121 befestigt. Der Pitchwinkel der Rotorblätter 130 ist vorzugsweise steuerbar entsprechend der aktuellen Windgeschwindigkeit.

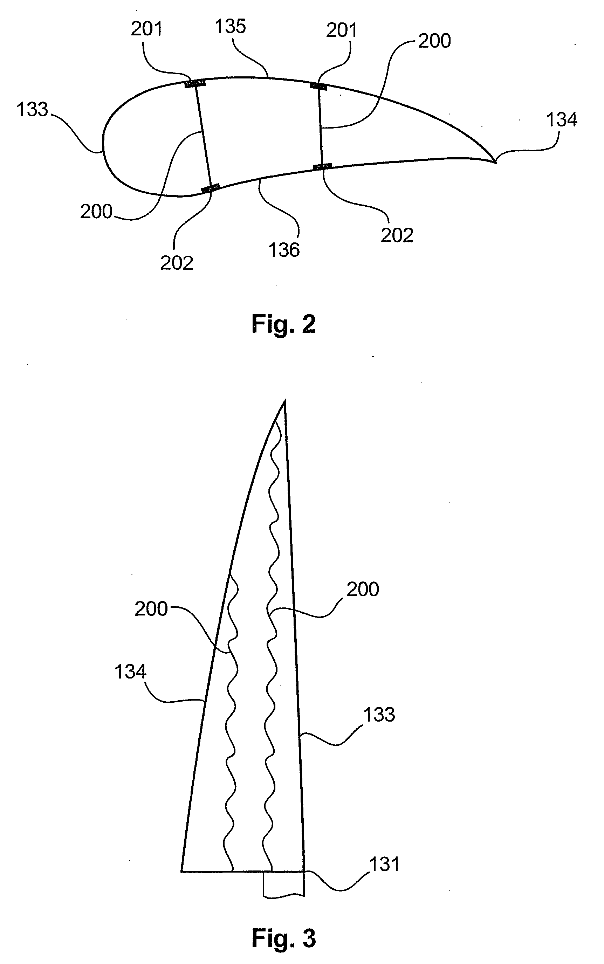

Fig. 2 zeigt einen Querschnitt eines Windenergieanlagen-Rotorblatts gemäß einem ersten Ausführungsbeispiel. Das Rotorblatt 130 weist wie in Fig. 1 gezeigt eine Rotorblattspitze 132 und eine Rotorblattwurzel 131 auf. Ferner weist das Rotorblatt 130 eine Vorderkante 133 und eine Hinterkante 134 auf. Des Weiteren weist das Rotorblatt 130 eine Saugseite 135 und eine Druckseite 136 auf. Zwischen der Druck- und der Saugseite 136, 135 können zumindest teilweise entlang der Länge des Rotorblattes (zwischen Rotorblattwurzel und Rotorblattstütze 131, 132) Stege bzw. Holmstege 200 vorgesehen werden. Die Stege weisen ein erstes Ende 201 und eine zweites Ende 202 auf. Das erste Ende 201 wird an der Saugseite 135 und das zweite Ende 202 wird an der Druckseite 136 befestigt. Mit anderen Worten, die Stege sind mechanisch mit der Saugseite und der Druckseite verbunden. Die Stege 200 werden vorzugsweise vorgesehen, um die mechanische Stabilität der Rotorblätter zu verbessern. Die Stege können durchgehend oder zumindest teilweise entlang der Länge bzw. der Längsrichtung des Rotorblattes zwischen der Rotorblattwurzel 131 und der Rotorblattspitze 132 vorgesehen werden.

Die Stege 200 gemäß dem ersten Ausführungsbeispiel sind entlang der Längsrichtung onduliert, gewellt oder sinusförmig ausgestaltet. Alternativ dazu können die Stege 200 entlang der Längsrichtung auch in Form einer Sägezahn- oder einer Dreieckschwingung ausgestaltet sein.

Die Stege können dazu dienen, einen Teil der Auftriebskraft von der Druck- auf die Saugseite zu übertragen. Die Stege können somit Kräfte senkrecht zu ihrer Längsrichtung übertragen, d. h. von der Druckseite zu der Saugseite des Rotorblatts. Die Stege sind jedoch weniger dazu geeignet, Kräfte in ihrer Längsrichtung zu übertragen.

Fig. 3 zeigt einen Längsquerschnitt eines Windenergieanlagen-Rotorblattes für die Windenergieanlage nach Fig. 1. Das Rotorblatt weist eine Rotorblattwurzel 131, eine Rotorblattspitze 132, eine Rotorblattvorderkante 133 und eine Rotorblatthinterkante 134 auf. Ferner verlaufen Stege 200 zwischen der Druckseite und der Saugseite des Rotorblattes (wie in Fig. 2 gezeigt). Diese Stege 200 sind entlang der Längsrichtung des Rotorblattes gewellt, onduliert oder sinusförmig ausgestaltet. Alternativ dazu können die Stege 200 auch in Form einer Sägezahn- oder einer Dreieckschwingung ausgestaltet sein.

Die Stege gemäß Fig. 2 und Fig. 3 können beispielsweise aus einem thermoplastischen Material maschinell gefertigt werden. Dies kann beispielsweise durch eine Warmumformung von faserverstärkten Thermoplasten erfolgen.

Die Stege können insbesondere aus aufgerollten faserverstärkten Thermoplasten hergestellt werden, wobei die Wellenform durch das Warmumformen erzeugt werden kann.

Durch diese wellenförmig ausgestalteten Stege kann eine Materialeinsparung von zwischen 10 % und 20 % (insbesondere 15 %) realisiert werden. Da die Stege in Längsrichtung wellenförmig bzw. onduliert ausgestaltet sind, werden diese Stege nicht zu dem Lastabtrag beitragen, so dass der Lastabtrag nach wie vor über an der Druck- und Saugseite vorgesehenen faserverstärkten Gurten erfolgt. Andererseits kann eine durch den Wind bedingte Auftriebskraft beispielsweise zu 90 % über die Stege 200 übertragen werden.

## Patentansprüche

1. Windenergieanlagen-Rotorblatt, mit
einer Rotorblattwurzel (131), einer Rotorblattspitze (132), einer Rotorblattvorderkante (133) und einer Rotorblatthinterkante (134),
einer Druckseite (136) und einer Saugseite (135), und
mindestens einem Steg (200) zumindest teilweise zwischen der Saug- und der Druckseite (135, 136),
wobei das Rotorblatt eine Längsrichtung zwischen der Rotorblattwurzel (131) und der Rotorblattspitze (132) aufweist,
**gekennzeichnet durch** eine wellenförmige Ausbildung des Steges (200) in Längsrichtung des Rotorblattes.

2. Rotorblatt nach Anspruch 1, ferner mit
Gurten (201, 202) an der Druckseite (136) und/oder der Saugseite (135), wobei der mindestens eine Steg (200) im Bereich der Gurte befestigt ist.

3. Rotorblatt nach Anspruch 1 oder 2,
**gekennzeichnet durch** einen **durch** Warmumformung faserverstärkter Thermoplaste hergestellten Steg (200).

4. Rotorblatt nach einem der vorstehenden Ansprüche,
**gekennzeichnet durch** eine sinusförmige Ausbildung der Wellenform des Steges (200).

5. Rotorblatt nach einem der vorstehenden Ansprüche,
**gekennzeichnet durch** wenigstens zwei, im Wesentlichen parallel zueinander angeordnete Stege (200).

6. Verwendung von wellenförmig ausgebildeten Stegen (200) bei der Herstellung eines Windenergieanlagen-Rotorblattes.

7. Windenergieanlage mit mindestens einem Rotorblatt nach einem der Ansprüche 1 bis 5.

8. Verfahren zum Herstellen eines Windenergieanlagen-Rotorblattes, welches eine Rotorblattwurzel (131), eine Rotorblattspitze (132), eine Rotorblattvorderkante (133), eine Rotorblatthinterkante (134), eine Druckseite (136) und eine Saugseite (135) aufweist, mit den Schritten:
Vorsehen eines wellenförmig ausgebildeten Steges (200) in Längsrichtung des Rotorblattes.

9. Verfahren nach Anspruch 8, wobei
der mindestens eine Steg (200) durch eine Warmumformung faserverstärkter Thermoplasten hergestellt wird.

## Claims

1. A wind power installation rotor blade comprising
a rotor blade root (131), a rotor blade tip (132), a rotor blade leading edge (133) and a rotor blade trailing edge (134),
a pressure side (136) and a suction side (135), and
at least one web (200) at least partially between the suction and the pressure side (135, 136), the rotor blade having a longitudinal direction between the rotor blade root (131) and the rotor blade tip (132),
**characterised by** a wave-shaped configuration of the web (200) in a longitudinal direction of the rotor blade.

2. A rotor blade according to claim 1, further comprising
spars (201, 202) at the pressure side (136) and/or the suction side (135), wherein the at least one web (200) is fastened in the region of the spars.

3. A rotor blade according to claim 1 or 2,
**characterised by** a web (200) produced by hot shaping of fibre-reinforced thermoplastic materials.

4. A rotor blade according to any one of the preceding claims,
**characterised by** a sinusoidal configuration of the wave shape of the web (200).

5. A rotor blade according to any one of the preceding claims,
**characterised by** at least two, substantially mutually parallel webs (200).

6. The use of webs (200) of a wave-shaped configuration in the production of a wind power installation rotor blade.

7. A wind power installation having at least one rotor blade according to any one of claims 1 to 5.

8. A method for the production of a wind power installation rotor blade that has a rotor blade root (131), a rotor blade tip (132), a rotor blade leading edge (133), a rotor blade trailing edge (134), a pressure side (136) and a suction side (135), comprising the steps of: providing a web (200) of a wave-shaped configuration in the longitudinal direction of the rotor blade.

9. A method according to claim 8, wherein
the at least one web (200) is produced by hot shaping of fibre-reinforced thermoplastic materials.

## Revendications

1. Pale de rotor d'éolienne, comprenant
une racine de pale de rotor (131), une extrémité de pale de rotor (132), une arête avant de pale de rotor (133) et une arête arrière de pale de rotor (134),
un côté de pression (136) et un côté d'aspiration (135), et
au moins une entretoise (200) au moins partiellement entre le côté aspiration et le côté pression (135, 136),
dans laquelle la pale de rotor présente une direction longitudinale entre la racine de pale de rotor (131) et l'extrémité de pale de rotor (132),
**caractérisée par** une réalisation sous forme ondulée de l'entretoise (200) dans la direction longitudinale de la pale de rotor.

2. Pale de rotor selon la revendication 1, comprenant en outre,
des sangles (201, 202) au niveau du côté de pression (136) et/ou du côté d'aspiration (135), ladite au moins une entretoise (200) étant fixée dans la zone des sangles.

3. Pale de rotor selon la revendication 1 ou 2,
**caractérisée par** une entretoise (200) fabriquée par formage à chaud de matières thermoplastiques renforcées par des fibres.

4. Pale de rotor selon l'une des revendications précédentes,
**caractérisée par** une réalisation sinusoïdale de la forme ondulée de l'entretoise (200).

5. Pale de rotor selon l'une des revendications précédentes,
**caractérisée par** au moins deux entretoises (200) disposées essentiellement de manière parallèle l'une par rapport à l'autre.

6. Utilisation d'entretoises (200) réalisées de manière à présenter une forme ondulée lors de la fabrication d'une pale de rotor d'éolienne.

7. Eolienne comprenant au moins une pale de rotor selon l'une quelconque des revendications 1 à 5.

8. Procédé de fabrication d'une pale de rotor d'éolienne, laquelle présente une racine de pale de rotor (131), une extrémité de pale de rotor (132), une arête avant de pale de rotor (133), une arête arrière de pale de rotor (134), un côté de pression (136) et un côté d'aspiration (135), ledit procédé présentant l'étape consistant à :
prévoir une entretoise (200) réalisée sous forme ondulée dans la direction longitudinale de la pale de rotor.

9. Procédé selon la revendication 8, dans lequel
ladite au moins une entretoise (200) est fabriquée par un formage à chaud de matières thermoplastiques renforcées par des fibres.
